# EUROPÄISCHE PATENTSCHRIFT

(11) **EP 0 721 831 B1**
(45) Veröffentlichungstag und Bekanntmachung des Hinweises auf die Patenterteilung: **10.10.2001**
(21) Anmeldenummer: 95120536.8
(22) Anmeldetag: 27.12.1995
(51) Int. Cl.: B29C 45/14

(54) **Verfahren und Vorrichtung zur Herstellung von Kunststoff/Metallverbundkörpern**
Method and apparatus for manufacturing plastic/metal composite bodies
Procédé et dispositif pour fabriquer des corps composites en matière plastique/métal

(30) Priorität: 13.01.1995 DE 19500790
(43) Veröffentlichungstag der Anmeldung: 17.07.1996
(73) Patentinhaber: BAYER AG, 51368 Leverkusen (DE)
(72) Erfinder: Rink, Manfred, D-50739 Köln (DE)

(56) Entgegenhaltungen:
- EP-A- 0 592 768
- US-A- 2 821 764
- US-A- 4 306 511
- US-A- 4 611 381
- US-A- 4 860 425
- US-A- 4 956 139

## Beschreibung

Die Erfindung betrifft ein Verfahren und eine Vorrichtung zur Herstellung von Kunststoff / Metallverbundkörpern durch eine Kombination von Metallfügetechnik und konventionellen Spritzgießverfahren in der Kavität eines modifizierten Spritzgießwerkzeuges.

Bei der konventionellen Technik zur Herstellung von Kunststoff / Metallverbundkörpem, im folgenden auch als Hybridstruktur bezeichnet, werden insbesondere bei großflächigen Teilen (z.B. Autotürrahmen) tiefgezogene und gestanzte Bleche aus einem Stück vorgelegt, die durch Spritzguss oder Kleben mit thermoplastischem Kunststoff verbunden werden. Nachteilig ist dieser Technik, dass insbesondere bei ausgestanzten Rahmenteilen vergleichsweise viel Blechabfall anfällt, der wieder aufgearbeitet werden muss. Eine Möglichkeit, dieses Problem zu umgehen, besteht darin, solche Rahmenblechteile aus genieteten oder geschweißten Einzelblechen zusammen zu stellen, welche anschließend mit Kunststoff angespritzt werden.

Das Fügen bzw. Schweißen von Blechteilen ist bekannt z.B. aus den Schriften DE 39 16 817 A1, DE 37 10 929 A1 und DE 37 01 895 A1.

Das Anspritzen von Blechteilen mit Kunststoff ist ebenfalls grundsätzlich bekannt. Beispielsweise erwähnt seien hierzu die Schriften DE 3 611 224 C2 und DE 3 839 855 A1, die entsprechende Verbundkörper offenbaren.

Die Patentschrift US 4 956 139 beschreibt ein Verfahren über eine Vorrichtung zur Anformung eines Kunststoffstiftes an ein dünnes Metallblech. Dabei wird mit Hilfe eines Schneidstempels in das dünne Blech ein Schlitz eingestanzt, der nachfolgend mit Kunststoff angespritzt wird. Das Patent US 4 956 139 befasst sich nicht mit der Bindung zweier oder mehrerer Bleche.

Die Patentschrift US 4 611 381 offenbart eine Vorrichtung und ein Verfahren zum Verbinden zweier Metallbleche. Die Verbindung wird dadurch erreicht, dass die kaltziehbaren bzw. stauchbaren Metallbleche mit einer geeigneten Vorrichtung so miteinander verpresst werden, dass in dem im Verhältnis zum Pressstempel untenliegendem Blech einerseits ein Hinterschnitt entsteht und das jeweils obere Blech eine Stauchzone erhält, die in den Hinterschnitt des unteren Bleches eingreift. Hierdurch wird das Lösen der Bleche senkrecht zur Kontaktfläche der Bleche verhindert. In dieser Schrift finden sich keinerlei Hinweise, die geschaffene Verbindung zusätzlich mittels Kunststoffnieten zu sichern. Hingegen soll auf die Anwendung von Nieten in dem beschriebenen Verfahren ausdrücklich verzichtet werden.

Es erweist sich als nachteilig, die bekannten Füge- bzw. Nietverfahren mit dem Spritzguss zu verbinden, da das Fügen vor allem entsprechend der oben genannten Verfahren aufwendiger zusätzlicher Maschinen bedarf, z. B. im Vergleich zu einer Stanzvorrichtung für ein einfaches Rahmenblech. Zudem sind die Vorgaben für die Toleranz der Maßhaltigkeit der gefügten Blechteile vergleichsweise kritisch, insbesondere bei der nachfolgenden Einlage der Teile in das Spritzgießwerkzeug. Es bestand die Aufgabe ein Verfahren zu finden, dass den Einsatz von Einzelblechen zur einfachen, insbesondere kostengünstigen Herstellung von Kunststoff / Metallverbundkörpern, insbesondere von Rahmenteilen ermöglicht, ohne die genannten Nachteile aufzuweisen und insbesondere eine gute Kraftschlüssigkeit der Einzelbleche untereinander zu ermöglichen.

Die Aufgabe wird erfindungsgemäß gelöst durch ein Verfahren zur Herstellung von Kunststoff/Metallverbundkörpern mit einer Kombination von Metallfügen von wenigstens zwei Einzelblechen und Spritzgießen eines thermoplastischen Kunststoffes, dadurch gekennzeichnet, dass in einem ersten Schritt einzelne zu verbindende Bleche in das Spritzgießwerkzeug eingelegt und in Richtung ihrer Kontaktfläche formschlüssig durch Fügen miteinander verbunden werden und in einem zweiten Schritt durch Anspritzen mit thermoplastischem Kunststoff von übereinandertiegenden Durchbrüchen im Bereich der Fügestelle und/oder von anderen übereinanderliegenden Durchbrüchen der Einzelbleche miteinander und mit dem in der restlichen Kavität des Spritzgießwerkzeuges gebildeten Kunststoffteil verbunden werden. Durch das Einlegen und Fügen der Einzelbleche im Spritzgießwerkzeug wird die aufwendige toleranzbehaftete Vorfertigung des konventionellen Niet- oder Fügeverfahren in einem gesonderten Arbeitsgang überflüssig. Auf entsprechende aufwendige Fügemaschinen kann daher verzichtet werden. Die Blechteile erhalten ihre laterale Fixierung durch das Verpressen der Teile. Die im Spritzgießprozess geformten Stellen an den Durchbrüchen fixieren die Bleche aufeinander und bilden gleichzeitig Stütz- und Haltepunkte für das Kunststoffteil des Verbundkörpers. Durch die Verwendung weniger Einzelbleche wird im Verhältnis zu konventionellen, aus großflächigem Material gestanzten Blechen, z.B. bei Rahmenblechen, der Blechabfall drastisch reduziert.

Das erfindungsmäße Verfahren kann durchgeführt werden mit allen grundsätzlichen bekannten thermoplastischen Kunststoffen bzw. Kunststoffmischungen, insbesondere mit Polycarbonat, Polyamid, Polyestern, ABS, Polypropylen. Zur Verbesserung der Haftung zwischen den Blechen einerseits und dem Kunststoff andererseits können die Bleche in an sich bekannter Weise vorbehandelt sein, z.B. mit einer Schicht zur Haftvermittlung oder einem Kleber.

Die Maßhaltigkeit der gefügten Einzelbleche kann dadurch gesteigert werden, daß die Bleche an gezielten Durchbrüchen über Zapfen, die in der Form des Spritzgießwerkzeugs angebracht sind, in ihrer Lage vor oder während des Fügens/Verpressens und/oder des Spritzgießens fixiert werden.

Gegenstand der Erfindung ist auch eine Vorrichtung zur Durchführung des erfindungsgemäßen Verfahrens, die dadurch gekennzeichnet ist, daß in der Kavität eins Spritzgießwerkzeuges eine oder mehrere Füge- bzw. Preßstempel gegebenenfalls mit entsprechendem Unterstempel an den Stellen angebracht sind, an denen die Einzelbleche durch Fügen miteinander verbunden werden sollen und die zum Anspritzen der Form, insbesondere der Fügestellen/Durchbrüche der Bleche mit thermoplastischen Kunststoffen aus der Kavität des Spritzgießwerkzeuges zurückgezogen werden können.

Als zur Durchführung des erfindungsgemäßen Verfahrens geeignete Einzelbleche kommen solche aus z.B. Stahl oder Aluminium in Frage insbesondere solche mit einer Dicke von 0,5 bis 0,9 mm.

Die Erfindung wird im folgenden anhand der Figuren beispielhaft näher erläutert.

Es zeigen:
- Fig. 1: Das Schema einer erfindungsgemäßen Vorrichtung mit eingelegten Einzelblechen.
- Fig. 2: Die laterale Verbindung der Einzelbleche durch Fügen.
- Fig. 3: Die gefüllte Spritzgußform mit zurückgezogenem Fügestempel.

### Beispiel

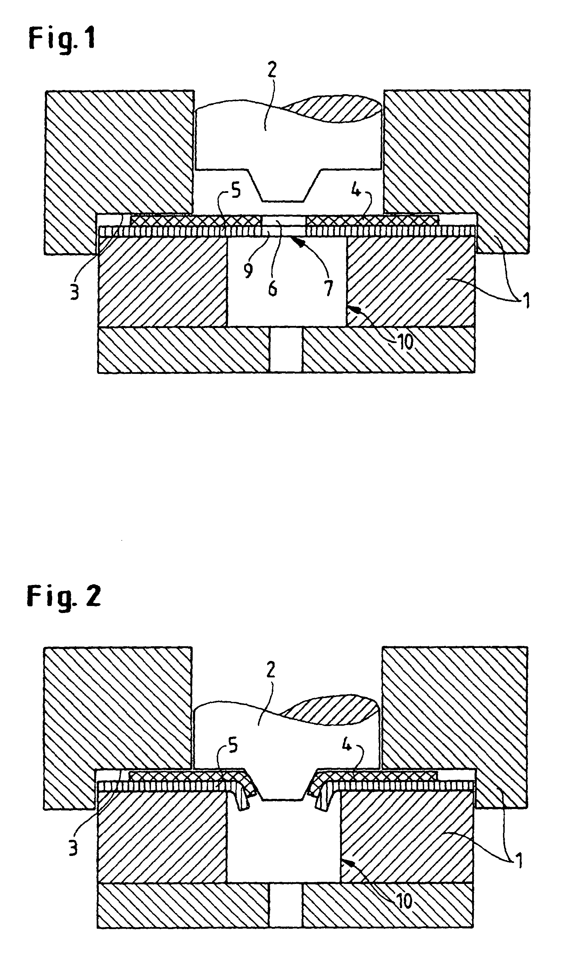

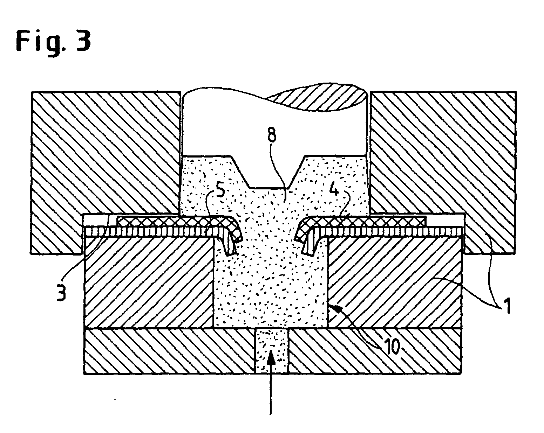

Eine konventionelle Spritzgußform 1 wurde dadurch variiert, daß an verschiedenen Stellen "Clinch"- bzw. Fügestempel 2 in der Gußteilwand 3 eingezogen sind. Die Gußform 1 wird mit den Einzelblechen 4, 5 belegt, so daß die Durchbrüche 6, 9 in den Blechen 4 bzw. 5 übereinander zu liegen kommen und im Bereich der Fügestellen 7 sitzen (siehe Figur 1). Entsprechend Figur 2 wird der Oberstempel 2 auf die Durchbrüche 6, 9 der Bleche gedrückt und die Bleche 4, 5 miteinander verpreßt. Der Oberstempel 2 wird zurückgezogen und die Spritzgußform wird anschließend mit thermoplastischem Kunststoff 8 gefüllt, der die Fügestelle 7 umfließt (siehe Figur 3).

Es bildet sich eine feste Verbindung zwischen den Einzelblechen, die auch gleichzeitig als Stützpunkt für den Verbund zwischen Blech und Kunststoffteil dienen kann

## Patentansprüche

1. Verfahren zur Herstellung von Kunststoff/Metallverbundkörpem mit einer Kombination von Metallfügen von wenigstens zwei Einzelblechen (4, 5) und Spritzgießen eines thermoplastischen Kunststoffes (8), **dadurch gekennzeichnet, dass** in einem ersten Schritt einzelne zu verbindende Bleche (4, 5) in das Spritzgießwerkzeug (1) eingelegt und in Richtung ihrer Kontaktfläche formschlüssig durch Fügen miteinander verbunden werden und in einem zweiten Schritt durch Anspritzen mit thermoplastischem Kunststoff von übereinanderliegenden Durchbrüchen (6, 9) im Bereich der Fügestelle (7) und/oder von anderen übereinanderliegenden Durchbrüchen der Einzelbleche (4, 5) miteinander und mit dem in der restlichen Kavität des Spritzgießwerkzeuges (1) gebildeten Kunststoffteil verbunden werden.

2. Verfahren nach Anspruch 1, **dadurch gekennzeichnet, dass** die Einzelbleche (4, 5) an bestimmten Durchbrüchen (6, 9) über Zapfen in der Form des Spritzgießwerkzeuges in ihrer Lage im Werkzeug (1) während des Fügens und/oder des Spritzgießens fixiert werden.

3. Verfahren nach den Ansprüchen 1 und 2, **dadurch gekennzeichnet, dass** als thermoplastischer Kunststoff (8) Polycarbonat, Polyamid, Polyester, Polystyrol, ABS, Polybutylenterephtalat oder Polypropylen eingesetzt werden.

4. Verfahren nach den Ansprüchen 1 bis 3, **dadurch gekennzeichnet, dass** die Bleche (4, 5) vor dem Anspritzen mit Kunststoff (8) mit einem Haftvermittler oder Kleber vorbehandelt sind.

5. Vorrichtung zur Durchführung des Verfahrens nach den Ansprüchen 1 bis 4, **dadurch gekennzeichnet, dass** in der Kavität (10) eines Spritzgießwerkzeuges (1) ein oder mehrere Fügestempel (2), mit jeweiligem Unterstempel (11) an Stellen angebracht sind, an denen die Einzelbleche(4, 5) miteinander durch Fügen verbunden werden und welche zum Anspritzen der Form (9) mit thermoplastischem Kunststoff (8) aus der Kavität (10) des Spritzgießwerkzeuges (1) zurückziehbar sind.

## Claims

1. Method for manufacturing plastics/metal composite bodies by means of a combination of metal joining of at least two single sheets (4, 5) and injection moulding a thermoplastic plastics material (8), **characterised in that** in a first step single sheets (4, 5) which are to be connected are placed in the injection moulding tool (1) and positively connected together by joining in the direction of their contact face, and in a second step are connected together and to the plastics part which is formed in the remainder of the cavity of the injection moulding tool (1) by injecting a thermoplastic plastics material into superimposed openings (6, 9) in the region of the joint (7) and/or into other superimposed openings in the single sheets (4, 5).

2. Method according to Claim 1, **characterised in that** the single sheets (4, 5) are fixed in their position in the tool (1) during joining and/or injection moulding by means of pins in the mould of the injection moulding tool.

3. Method according to Claims 1 and 2, **characterised in that** polycarbonate, polyamide, polyester, polystyrene, ABS, polybutylene terephthalate or polypropylene are used as the thermoplastic plastics material (8).

4. Method according to Claims 1 to 3, **characterised in that** the sheets (4, 5) are pretreated with an adhesion promoter or an adhesive before plastics material (8) is injected.

5. Apparatus for carrying out the method according to Claims 1 to 4, **characterised in that** one or a plurality of joining ram(s) (2), with a respective bottom ram (11), is/are fitted in the cavity (10) of an injection moulding tool (1) at locations at which the single sheets (4, 5) are to be connected together by joining, which ram(s) can be withdrawn from the cavity (10) of the injection moulding tool (1) to inject thermoplastic plastics material (8) into the mould (9).

## Revendications

1. Procédé pour la fabrication de corps composites matière plastique/métal avec une combinaison de l'assemblage métallique d'au moins deux tôles individuelles (4,5) et de l'injection et du moulage par injection d'une matière thermoplastique (8), **caractérisé en ce que** lors d'une première étape, on met en place dans l'outil de moulage par injection (1) des tôles individuelles qu'il s'agit de relier (4, 5) et on les relie les unes aux autres dans la direction de leurs surfaces de contact par assemblage à coopération de formes, et lors d'une deuxième étape, par injection de la matière thermoplastique dans des traversées (6, 9) superposées dans la région de l'emplacement de jonction (7) et/ou dans d'autres traversées superposées des tôles individuelles (4, 5), elles sont reliées les unes aux autres ainsi qu'avec la partie en matière plastique formée dans le reste de la cavité de l'outil de moulage par injection (1).

2. Procédé selon la revendication 1, **caractérisé en ce que**, pendant leur liaison et/pendant le moulage par injection, les tôles individuelles (4,5) sont fixées quant à leur position dans l'outil (1) au niveau de certaines traversées (6, 9) au moyen de tenons dans le moule de l'outil de moulage par injection.

3. Procédé selon les revendications 1 et 2, **caractérisé en ce que** l'on utilise à titre de matière thermoplastique (8) du polycarbonate, polyamide, polyester, polystyrène, ABS, polybutylène téréphtalate, ou polypropylène.

4. Procédé selon les revendications 1 à 3, **caractérisé en ce que** les tôles (4, 5) sont prétraitées avec un agent adhésif ou une colle avant l'injection de la matière thermoplastique (8).

5. Appareil pour mettre en oeuvre le procédé selon les revendications 1 à 4, **caractérisé en ce que** dans la cavité (10) d'un outil de moulage par injection (1) un ou plusieurs poinçons d'assemblage (2), avec enclumes respectives (11) sont prévus à des emplacements auxquels les tôles individuelles (4, 5) sont reliées les unes aux autres par assemblage, et susceptibles d'être rétractés hors de la cavité (10) de l'outil de moulage par injection (1) pour l'injection de matière thermoplastique (8) dans le moule (9).
